(19) Europäisches Patentamt / European Patent Office / Office européen des brevets

(11) **EP 3 866 374 A1**

(12) **EUROPEAN PATENT APPLICATION**

(43) Date of publication:
**18.08.2021 Bulletin 2021/33**

(51) Int Cl.:
**H04L 5/00** *(2006.01)*    **H04B 7/06** *(2006.01)*

(21) Application number: **20157441.5**

(22) Date of filing: **14.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
- **PAJUKOSKI, Kari**
  **90630 Oulu (FI)**
- **TIIROLA, Esa**
  **90630 Oulu (FI)**
- **LEVANEN, Toni**
  **33720 Tampere (FI)**
- **VALKAMA, Mikko**
  **37120 Nokia (FI)**

(74) Representative: **Laine IP Oy**
**Porkkalankatu 24**
**00180 Helsinki (FI)**

(54) **IMPROVEMENTS FOR INITIAL ACCESS IN CELLULAR COMMUNICATION NETWORKS**

(57)    According to an example aspect of the present invention, there is provided a method comprising, determining locations of at least two Synchronization Signal Blocks, SSBs, in frequency, wherein a frequency difference between adjacent SSBs of the at least two SSBs is $N * X$ MHz, and N is determined by an apparatus based at least on a transmission bandwidth of one of the at least two SSBs and transmitting the at least two SSBs on a carrier, wherein the at least two SSBs are transmitted simultaneously.

610
Determining locations of at least two Synchronization Signal Blocks, SSBs, in frequency, wherein a frequency difference between adjacent SSBs of the at least two SSBs is N*M MHz, and N is determined by an apparatus based at least on a transmission bandwidth of one of the at least two SSBs

620
Transmitting the at least two SSBs on a carrier, wherein the at least two SSBs are transmitted simultaneously

FIGURE 6

EP 3 866 374 A1

**Description**

FIELD

Various example embodiments relate in general to cellular communication networks and more specifically, to improvements for initial access in such networks.

BACKGROUND

Scarcity of available frequency spectrum is an issue for various wireless communication networks, such as for cellular communication networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. One of the topics in the 3GPP discussions is related to increasing available frequency spectrum by exploiting higher frequencies, such as frequencies beyond 52.6 GHz, for communication and there is a need to provide improved methods, apparatuses and computer programs for initial access on said frequencies. Such improvements may be exploited for 5G networks and also for other cellular communication networks in the future as well, even for lower frequencies, such as 20 - 52.6 GHz.

SUMMARY

According to some aspects, there is provided the subject-matter of the independent claims. Some embodiments are defined in the dependent claims.
The scope of protection sought for various embodiments of the invention is set out by the independent claims. The embodiments and features, if any, described in this specification that do not fall under the scope of the independent claims are to be interpreted as examples useful for understanding various embodiments of the invention.
According to a first aspect of the present invention, there is provided an apparatus comprising means for determining locations of at least two Synchronization Signal Blocks, SSBs, in frequency, wherein a frequency difference between adjacent SSBs of the at least two SSBs is N * X MHz, and N is determined by the apparatus based at least on a transmission bandwidth of one of the at least two SSBs and means for transmitting the at least two SSBs on a carrier, wherein the at least two SSBs are transmitted simultaneously. The apparatus of the first aspect may be a BS or a relay, or a control device configured to control the functioning thereof, possibly when installed therein.
Embodiments of the first aspect may comprise at least one feature from the following bulleted list:

- the apparatus further comprises means for determining N based at least on a subcarrier spacing of the carrier, wherein the subcarrier spacing is preferably 240 kHz and N=4; and/or means for determining X based at least on a predefined SSB raster, wherein X is preferably 17.28 MHz;

- the apparatus further comprises means for determining N based at least on a bandwidth of one control resource set of the at least two SSBs or a bandwidth of one SSB and one control resource set of the at least two SSBs;

- the apparatus further comprises means for determining N to be a smallest positive integer such that at least one of the adjacent SSBs in frequency and adjacent Type0-Physical Downlink Control Channels, PDCCHs, in frequency occupy non-overlapping frequency resources in frequency;

- the apparatus further comprises means for determining a maximum number of simultaneous SSB locations in frequency based on a minimum bandwidth capability of a user equipment;

- the apparatus further comprises means for determining at least one of a maximum number of simultaneous SSB locations in frequency and parameter N based on a subcarrier spacing selected for the at least two SSBs by the apparatus;

- the apparatus further comprises means for adapting a number of simultaneous SSBs in frequency based on a beamwidth used to transmit the at least two SSBs and/or a number of transceiver chains of the apparatus;

- the apparatus further comprises means for transmitting an index of a frequency location of an individual SSB in the individual SSB or in a Remaining Minimum System Information, RMSI, associated with the individual SSB;

- the individual SSB or the RMSI associated with the individual SSB indicates a number of frequency locations used to carry the at least two SSBs;

- the at least two SSBs are overlapping in time and non-overlapping in frequency.

According to a second aspect of the present invention, there is provided an apparatus comprising means for receiving, from a cell of a base station or a relay, at least two Synchronization Signal Blocks, SSBs, simultaneously on a carrier, wherein a frequency difference between adjacent SSBs of the at least two SSBs is N * X MHz, and N is based at least on a transmission bandwidth of one of the at least two SSBs and means for selecting, based on the at least two SSBs, at least one strongest beam for communicating with the cell of the base station or the relay. The apparatus of the second aspect may be a UE or a relay, or a control device configured to control the functioning thereof, possibly when installed therein.
Embodiments of the second aspect may comprise at least one feature from the following bulleted list:

- X is based at least on a predefined SSB raster, and X is preferably 17.28 MHz, and/or N is based at least on a subcarrier spacing of the carrier, wherein the subcarrier spacing is preferably 240 kHz and N=4;

- the apparatus further comprises means for detecting an individual SSB of the at least two SSBs and means for obtaining an index of the detected individual SSB and a number of simultaneous SSBs channel bandwidth or a bandwidth part;

- the apparatus further comprises means for adjusting a carrier frequency of the apparatus based on the index of the detected individual SSB and the number of simultaneous SSBs;

- the apparatus further comprises means for determining a frequency location of another SSB of the at least two SSBs based on the index of the detected individual SSB;

- the at least two SSBs are overlapping in time and non-overlapping in frequency.

According to a third aspect, there is provided a first method, for a base station or a relay, comprising determining locations of at least two Synchronization Signal Blocks, SSBs, in frequency, wherein a frequency difference between adjacent SSBs of the at least two SSBs is N * X MHz, and N is determined by an apparatus based at least on a transmission bandwidth of one of the at least two SSBs and transmitting the at least two SSBs on a carrier, wherein the at least two SSBs are transmitted simultaneously.
According to a fourth aspect, there is provided a second method, for a user equipment or a relay, comprising receiving, from a cell of a base station or a relay, at least two Synchronization Signal Blocks, SSBs, simultaneously on a carrier, wherein a frequency difference between adjacent SSBs of the at least two SSBs is N * X MHz, and N is based at least on a transmission bandwidth of one of the at least two SSBs and selecting, based on the at least two SSBs, at least one strongest beam for communicating with the cell of the base station or the relay.
According to a fifth aspect of the present invention, there is provided an apparatus comprising at least one processing core, at least one memory including computer program code, the at least one memory and the computer program code being configured to, with the at least one processing core, cause the apparatus at least to perform, determine locations of at least two Synchronization Signal Blocks, SSBs, in frequency, wherein a frequency difference between adjacent SSBs of the at least two SSBs is N * X MHz, and N is determined by the apparatus based at least on a transmission bandwidth of one of the at least two SSBs and transmit the at least two SSBs on a carrier, wherein the at least two SSBs are transmitted simultaneously. The apparatus of the fifth aspect may be a BS or a relay, or a control device configured to control the functioning thereof, possibly when installed therein.
Embodiments of the fifth aspect may comprise at least one feature from the following bulleted list:

- The at least one memory and the computer program code may be further configured to, with the at least one processing core, cause the apparatus at least to perform, determine N based at least on a subcarrier spacing of the carrier, wherein the subcarrier spacing is preferably 240 kHz and N=4; and/or determine X based at least on a predefined SSB raster, wherein X is preferably 17.28 MHz;

- The at least one memory and the computer program code may be further configured to, with the at least one processing core, cause the apparatus at least to perform, determine N based at least on a bandwidth of one control resource set of the at least two SSBs or a bandwidth of one SSB and one control resource set of the at least two SSBs;

- The at least one memory and the computer program code may be further configured to, with the at least one processing core, cause the apparatus at least to perform, determine N to be a smallest positive integer such that at least one of the adjacent SSBs in frequency and adjacent Type0-Physical Downlink Control Channels, PDCCHs, in frequency occupy non-overlapping frequency resources in frequency;

- The at least one memory and the computer program code may be further configured to, with the at least one processing core, cause the apparatus at least to perform, determine a maximum number of simultaneous SSB locations in frequency based on a minimum bandwidth capability of a user equipment;

- The at least one memory and the computer program code may be further configured to, with the at least one processing core, cause the apparatus at least to perform, determine at least one of a maximum number of simultaneous SSB locations in frequency and parameter N based on a subcarrier spacing selected for the at least two SSBs by the apparatus;

- The at least one memory and the computer program code may be further configured to, with the at least one processing core, cause the apparatus at least to perform, adapt a number of simultaneous SSBs in frequency based on a beamwidth used to transmit the at least two SSBs and/or a number of transceiver chains of the apparatus;

- The at least one memory and the computer program code may be further configured to, with the at least one processing core, cause the apparatus at least to perform, transmit an index of a frequency location of an individual SSB in the individual SSB or in a Remaining Minimum System Information, RMSI, associated with the individual SSB;

- the individual SSB or the RMSI associated with the individual SSB indicates a number of frequency locations used to carry the at least two SSBs;

- the at least two SSBs are overlapping in time and non-overlapping in frequency.

According to a sixth aspect of the present invention, there is provided an apparatus comprising at least one processing core, at least one memory including computer program code, the at least one memory and the computer program code being configured to, with the at least one processing core, cause the apparatus at least to perform, receive from a cell of a base station or a relay, at least two Synchronization Signal Blocks, SSBs, simultaneously on a carrier, wherein a frequency difference between adjacent SSBs of the at least two SSBs is N * X MHz, and N is based at least on a transmission bandwidth of one of the at least two SSBs and select, based on the at least two SSBs, at least one strongest beam for communicating with the cell of the base station or the relay. The apparatus of the second aspect may be a UE or a relay, or a control device configured to control the functioning thereof, possibly when installed therein.

Embodiments of the sixth aspect may comprise at least one feature from the following bulleted list:

- X is based at least on a predefined SSB raster, and X is preferably 17.28 MHz, and/or N is based at least on a subcarrier spacing of the carrier, wherein the subcarrier spacing is preferably 240 kHz and N=4;

- The at least one memory and the computer program code may be further configured to, with the at least one processing core, cause the apparatus at least to perform, detect an individual SSB of the at least two SSBs and means for obtaining an index of the detected individual SSB and a number of simultaneous SSBs channel bandwidth or a bandwidth part;

- The at least one memory and the computer program code may be further configured to, with the at least one processing core, cause the apparatus at least to perform, adjust a carrier frequency of the apparatus based on the index of the detected individual SSB and the number of simultaneous SSBs;

- The at least one memory and the computer program code may be further configured to, with the at least one processing core, cause the apparatus at least to perform, determine a frequency location of another SSB of the at least two SSBs based on the index of the detected individual SSB;

- the at least two SSBs are overlapping in time and non-overlapping in frequency.

According to a seventh aspect of the present invention, there is provided non-transitory computer readable medium having stored thereon a set of computer readable instructions that, when executed by at least one processor, cause an apparatus to at least perform the first method. According to an eighth aspect of the present invention, there is provided non-transitory computer readable medium having stored thereon a set of computer readable instructions that, when executed by at least one processor, cause an apparatus to at least perform the second method.

According to a ninth aspect of the present invention, there is provided a computer program configured to perform the first method. According to a tenth aspect of the present invention, there is provided a computer program configured to perform the second method.

BRIEF DESCRIPTION OF THE DRAWINGS

FIGURE 1 illustrates an exemplary network scenario in accordance with at least some embodiments;

FIGURE 2 illustrates different approaches in accordance with at least some embodiments;

FIGURE 3 illustrates exemplary SSB transmission modes in accordance with at least some embodiments;

FIGURE 4 illustrates an example apparatus capable of supporting at least some embodiments;

FIGURE 5 illustrates a signalling graph in accordance with at least some embodiments;

FIGURE 6 illustrates a flow graph of a first method in accordance with at least some embodiments;

FIGURE 7 illustrates a flow graph of a second method in accordance with at least some embodiments.

EMBODIMENTS

Initial access in a cellular communication network may be improved by the procedures described herein. More specifically, a configurable Synchronization Signal Block, SSB, pattern may be defined, wherein the configurable SSB pattern comprises locations of at least two SSBs in frequency. The at least two SSBs may be parallel in frequency and follow a predefined grid which may be defined such that a frequency difference between adjacent SSBs of the at least two SSBs is $N * X$ MHz, wherein N may be determined based at least on a subcarrier spacing of a carrier, to enable transmission of the at least two SSBs simultaneously, or at least partly at the same time, on different orthogonal frequency resources. Said frequency resources may be consecutive but non-overlapping parallel resources in frequency. Even though embodiments of the present invention are related to a frequency domain pattern, the entire patter may also comprise multiple predefined locations in time for the at least two SSBs.

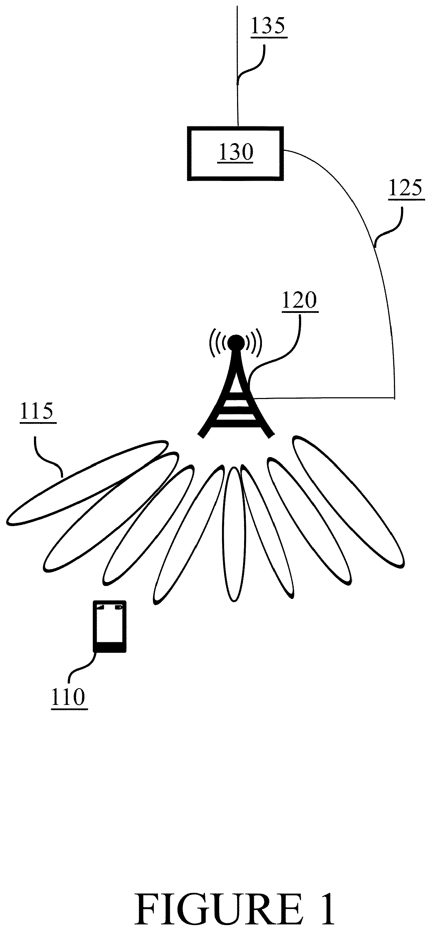

FIGURE 1 illustrates an exemplary network scenario in accordance with at least some embodiments. According to the example scenario of FIGURE 1, there may be a cellular communication system, which comprises one or more UEs 110, one or more Base Stations, BS, 120, and core network element 130. UE 110 may be connected to BS 120 via air interface using beams 115. That is to say, the cellular communication network may be a beam-based system, operating for example on carrier frequencies beyond 52.6 GHz, even though lower frequencies are also possible as well. In some embodiments, BS 120 may be a multipanel BS, i.e., BS 120 may comprise multiple subpanels with independent transmitter/receiver chains and each subpanel may be used to transmit one or more beams at a time.

UE 110 may comprise, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal, such as a Customer Premises Equipment, CPE. In the example system of FIGURE 1, UE 110 may communicate wirelessly with BS 120, or a cell of BS 120, via at least one beam 115. Beams 115 may be referred to as transmit beams, transmitted by BS 120.

In some embodiments of the present invention, the exemplary network scenario may comprise a relay instead of, or in addition to UE 110 and/or BS 120. Relaying may be used for example when operating on millimeter-wave frequencies. One example of the relay may be an Integrated Access and Backhaul, IAB, node. The IAB node may be referred to as a self-backhauling relay as well. Another example of a relay may be an out-band relay. In general, the relay may comprise two parts:

1) Distributed Unit, DU, part which may facilitate functionalities of BS 120, such as a gNB
2) Mobile Termination, MT, part which may facilitate functionalities of UE 110, i.e., a backhaul link which may be the communication link between a parent node (DU) and the relay, such as an IAB node. In some embodiments, the MT part may be referred to as a IAB-UE as well, i.e., the relay may correspond to UE 110 partly and perform similar operations as UE 110.

Air interface between UE 110 and BS 120 may be configured in accordance with a Radio Access Technology, RAT, which both UE 110 and BS 120 are configured to support. Examples of cellular RATs include Long Term Evolution, LTE, New Radio, NR, which may also be known as fifth generation, 5G, radio access technology and MulteFire. For example, in the context of LTE, BS 120 may be referred to as eNB while in the context of NR, BS 120 may be referred to as gNB. In any case, embodiments of the present invention are not restricted to any particular wireless technology. Instead, embodiments may be exploited in any cellular communication network, wherein efficient initial access using multiple SSBs is desirable.

BS 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. BS 120 may be connected with at least one other BS as well via an inter-base station interface (not shown in FIGURE 1), even though in some embodiments the inter-base station interface may be absent. BS 120 may be connected, directly or via at least one intermediate node, with core network 130 or with another core network.

Using 5G/NR as an example, embodiments of the present invention may be exploited, e.g., for operation on frequency spectrum beyond 52.6 GHz. Ranges, use cases, deployment scenarios and requirements for such frequency spectrum are being discussed in 3rd Generation Partnership Project, 3GPP, Radio Access Network, RAN, meetings. Objectives discussed in the meetings comprise waveform design for operation beyond 52.6 GHz and study of physical layer design for above 52.6 GHz. The designs should take into consideration at least applicable numerology including subcarrier spacing, channel bandwidth (including maximum bandwidth) and practical Radio Frequency, RF, impairments. Even though the present invention is not limited to any specific frequency bands, potential high mm-wave bands for 5G and beyond systems comprise at least unlicensed frequency bands 57 - 66 GHz and licensed/unlicensed frequency bands 66 - 71 GHz. Nevertheless, embodiments of the present invention may be utilized for other frequency bands as well, i.e., embodiments of the present invention are not limited to any specific frequency band. For instance, embodiments of the present invention may be applied also on frequency range 2 (FR2), i.e. spectrum -20 - 52.6 GHz.

Operation on higher carrier frequencies brings various challenges. For instance, output power per power amplifier decreases as a function of carrier frequency due to physical limitations of the transistors. Furthermore, Orthogonal Frequency Division Multiplexing, OFDM, may be used at least for downlink transmissions. This means that power amplifiers need to operate with relatively high back-off values, which requires more beamforming gain. At the same time, propagation loss increases as a function of carrier frequency as well. In order to reach the same Effective Isotropic Radiated Power, EIRP, on higher carrier frequencies, as on lower carrier frequencies, higher antenna/beamforming gain needs to be provided by an antenna. However, higher antenna/beamforming gain turns into narrower beamwidths that can be used for transmission and/or reception of signals.

SSBs (with Physical Broadcast Channels, PBCHs) may be used by UE 110 for initial access to a cell of BS 120. In some embodiments, a SSB may comprise 1-symbol Primary Synchronization Signal, PSS, a 1-symbol Secondary Synchronization Signal, SSS, and a 2-symbol PBCH. The SSB may be referred to as SS/PBCH block as well, because SS and PBCH may be in a single block and transmitted together. The SS part of the SS/PBCH block may comprise the PSS and the SSS and the PBCH part of the SS/PBCH block may comprise Master Information Block, MIB, and Demodulation Reference Signals, DMRS. The PSS may be used for frame synchronization and, along with the SSS, for determining a physical cell identity. That is to say, a SSB may be used for example for detecting a cell of BS 120 that transmitted the SSB. Each SSB block may be associated with Control Resource Set, CORESET, for Type-0 Physical Downlink Control Channel, PDCCH, which may be used, e.g., for scheduling Remaining System Information, RMSI. RMSI may comprise necessary parameters for UE 110 to establish a connection, e.g., parameters needed to transmit Physical Random Access Channel, PRACH.

Regarding SSB transmissions, the use of narrower beamwidths means that a cell of BS 120 needs to have a possibility to increase the number of SSB beams. That is to say, a cell of BS 120 needs to have a possibility to increase the number of SSB positions. So when using higher frequencies, such as frequencies beyond 52.6 GHz, the number of SSB beams needs to be increased in order to support a reasonable cell radius, i.e., to support the same cell radius as for below 52.6 GHz. In addition, frequency dependent path loss difference should be compensated by additional antenna/beamforming gain. Such a requirement holds at least for the licensed band scenarios with a high EIRP. Based on NR Rel-15/16 design the maximum number of SSB beams/cell is 64.

Nevertheless, beam sweeping time is quite long for larger number of supported beams in transmitter and receiver. On the other hand, it makes sense to utilize the capabilities of BS 120, such as the improving capabilities of gNBs (5G BSs), maximally, even though BS 120 may not be able to transmit other signals during SSB transmissions.

Embodiments of the present invention therefore improve initial access by enabling configuration of multiple parallel frequency locations for SSBs of different beams within a cell of BS 120. More specifically, embodiments of the present invention may be used to provide reduced beam training latency or to increase the number of supported beams with fixed latency. Furthermore, they allow reduction of the system overhead and/or scheduling restrictions involved in the SSB beam sweep. It also minimizes the amount of additional signalling needed to convey via SSB/RMSI, because UE 110 can learn the SSB structure implicitly based on a SSB format and an existing SSB raster.

In some embodiments, parallel SSBs of a cell of BS 120 may be located within an existing, predefined frequency (and time) SSB raster. That is to say, frequency division multiplexing of SSBs may be applied on top of the existing, predefined, SSB raster. The existing, predefined SSB raster may be for example a SSB raster defined in Rel-15 3GPP standard specifications. Parallel SSBs may be for example arranged in a predefined manner such that when UE 110 finds a frequency location of kth SSB of the cell, i.e., kth SSB transmitted by BS 120 is detected and received by UE 110, UE 110 may determine other possible locations, such as frequency locations of *(k-1)*th and *(k+1)*th SSBs based on that. Consequently, UE 110 may tune to the frequency locations of of *(k-1)*th and *(k+1)*th SSBs right away upon receiving kth SSB. Beam scanning process of UE 110 is therefore expedited.

Alternatively, or in addition, frequency-time structure, or at least frequency structure of the SSBs transmitted by BS 120 may be indicated for example in a Remaining Minimum System Information, RMSI. For example, said RMSI may indicate parameters, such as a total number of SSBs transmitted by BS 120 in parallel in frequency and/or an index of the detected SSB in frequency.

Alternatively, or in addition, information about a frequency-time structure of a configurable SSB pattern, the configurable SSB pattern comprising the at least two SSBs in parallel in frequency, may be indicated in the individual SSB or in the RMSI associated with the individual SSB. Thus, UE 110 may know to perform search also from other frequency locations. The individual SSB or the RMSI associated with the individual SSB may similarly indicate a number of frequency locations used to carry the at least two SSBs.

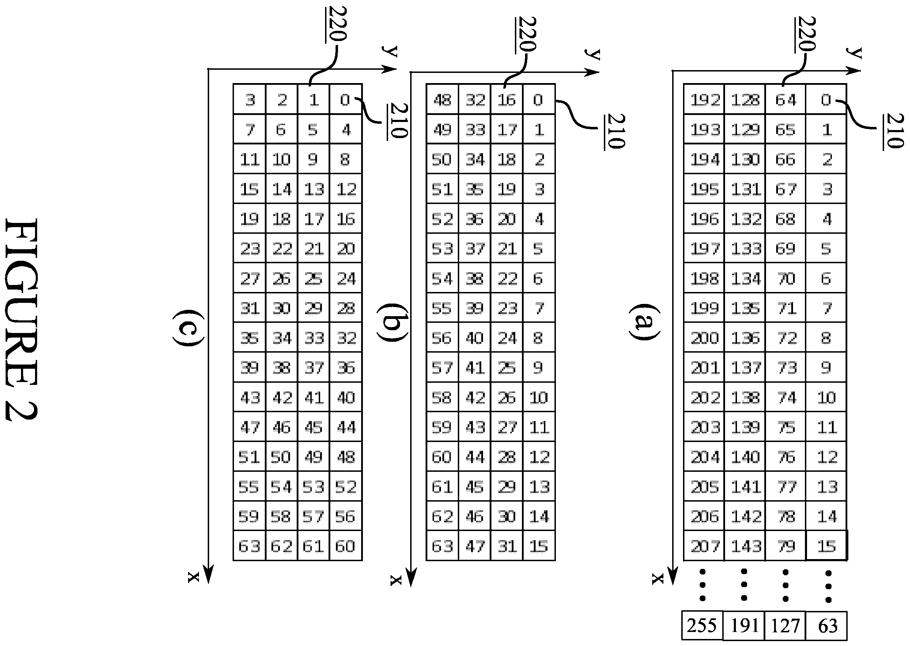

FIGURE 2 illustrates exemplary approaches in accordance with at least some embodiments. In FIGURE 2, x-axis corresponds to time and *y*-axis to frequency. Different numbers in FIGURE 2 correspond to different frequency-time resources for SSBs. FIGURE 2 illustrates approaches, wherein frequency numbering starts from a highest position in frequency but embodiments of the present invention also comprise approaches, wherein frequency numbering may start from a lowest position in frequency, or from any point between the lowest and the highest positions in frequency. The same applies to locations in time.

FIGURE 2 demonstrates at least two SSBs, such as first SSB 210 and second SSB 220. As shown in FIGURE 2, first SSB 210 and second SSB 220 may be in parallel in frequency. First SSB 210 and second SSB 220 may be adjacent to each other in frequency. In some embodiments, the at least two SSBs 210 and 220 may be transmitted via different beams, i.e., first SSB 210 may be transmitted via a *n*th beam and second SSB may be transmitted via a *(n+1)*th beam

FIGURE 2(a) demonstrates an approach, wherein the SSBs are placed in time first and then in frequency, and a total number of SSBs is 256. FIGURE 2(b) demonstrates an approach, wherein the SSBs are placed in time first and then in frequency, and a total number of SSBs is 64. FIGURE 2(c) demonstrates an approach, wherein the SSBs are placed in frequency first and then in time, and a total number of SSBs is 64.

In some embodiments, the at least two SSBs may be on a raster of, or confined to a bandwidth of, 400 MHz, or any other predefined minimum bandwidth capability. For instance, the SSB raster may be 24250.08 MHz + N * 17.28 MHz, wherein N = 0:4383, up to 99988,32 MHz. So if a 4096-point Fast Fourier Transform, FFT, and a subcarrier spacing of 120 kHz are used by UE 110, all SSBs need to be transmitted within a 400 MHz channel bandwidth or bandwidth part. In NR Rel-15/16, SSB supports 120 kHz and 240 kHz subcarrier spacing. However, embodiments of the present invention support any SSB numerology.

In some embodiments, BS 120 may be a multipanel device and comprise multiple subpanels with independent transmitter/receiver chains. In such a case, BS 120 may simultaneously transmit multiple SSBs from different subpanels to different directions or to the same direction by using orthogonal frequency resources, such as different, orthogonal subcarriers.

Each subpanel may be used to transmit a beam. Thus, beam sweep delay may be reduced for example with 64 beams and/or the number of supported beams may be increased to $k*64$, wherein $k$ is a minimum of a number of subpanels and a number of SSBs to be transmitted. The number of subpanels may refer to a number of subpanels with their own transmitter chain. The number of SSBs to be transmitted may refer to a maximum number of SSBs that can be multiplexed in frequency with a given subcarrier spacing and a maximum FFT size.

In some embodiments, frequency division multiplexing of SSBs may be tied to the multipanel capability of BS 120. For instance, a maximum number of SSBs that can be transmitted simultaneously on different frequencies, i.e., in parallel in frequency, may be increased by increasing a number of subpanels (transmitter/receiver chains) of BS 120. Hence more SSB beams may be supported with a given overhead or reduced SSB overhead may be supported with a given number of SSB beams. In some embodiments, indication of a used structure may be required in an individual SSB, wherein the used structure may refer to the frequency multiplexing structure, number of SSBs and SSB frequency index or index of a mapping table mapping a specific SSB index into a frequency domain location with respect to other SSBs.

Moreover, in some embodiments, each frequency domain SSB may comprise an unique indication of the used structure (RMSI), but indication in consecutive time domain SSBs may be similar. This allows combining the consecutive RMSIs at UE 110 in time, but not in frequency.

If UE 110 supports a single beam, UE 110 may try to detect all simultaneously transmitted transmitter beams with a selected receiver beam simultaneously by correlating over different subcarriers, i.e., different SSBs, located in different parts of a channel bandwidth or a bandwidth part measured by UE 110. Upon receiving one SSB correctly, for example based on a detected PBCH, UE 110 may learn the entire frequency-time structure of sweeping SSBs. In some embodiments, if UE 110 supports multiple parallel beams, UE 110 may search for a single SSB via multiple receiving beam hypothesis at a time.

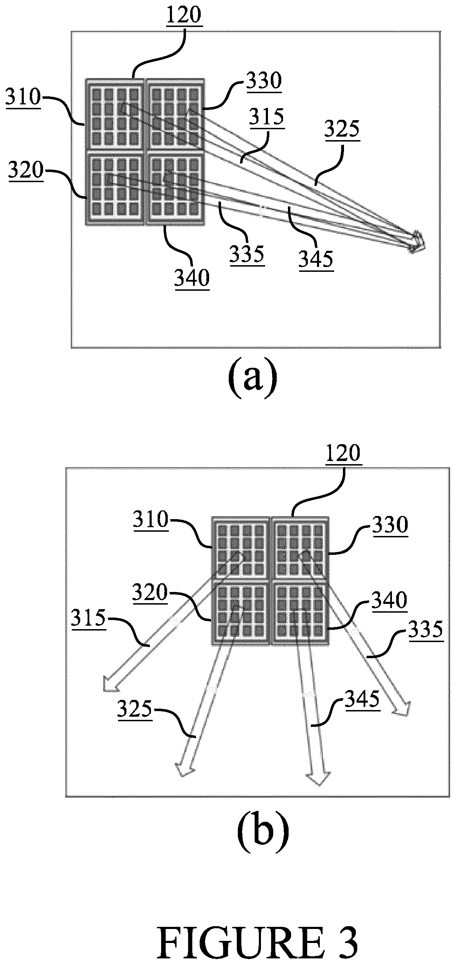

FIGURE 3 illustrates exemplary SSB transmission modes in accordance with at least some embodiments. More specifically, FIGURE 3 illustrates for example BS 120 of FIGURE 1, such as a gNB. As shown in FIGURE 3, BS 120 may comprise four subpanels 310, 320, 330 and 340 and each subpanel may transmit one beam 315, 325, 335 and 345, respectively. In some embodiments, BS 120 may support two or more SSB transmission modes.

FIGURE 3(a) illustrates a SSB transmission mode, wherein BS 120 may simultaneously transmit a single SSB from different subpanels to the same direction by using the same frequency resource. The SSB transmission mode illustrated in FIGURE 3(a) may be used for a coverage limited case. FIGURE 3(b) illustrates a SSB transmission mode, wherein BS 120 may simultaneously transmit multiple SSBs from different subpanels to different directions by using orthogonal frequency resources. The SSB transmission mode illustrated in FIGURE 3(a) may be used for a capacity limited situation. In some embodiments, UE 110 may determine the SSB transmission mode based on a received indication, in an RMSI or via PBCH (at least partially) for example.

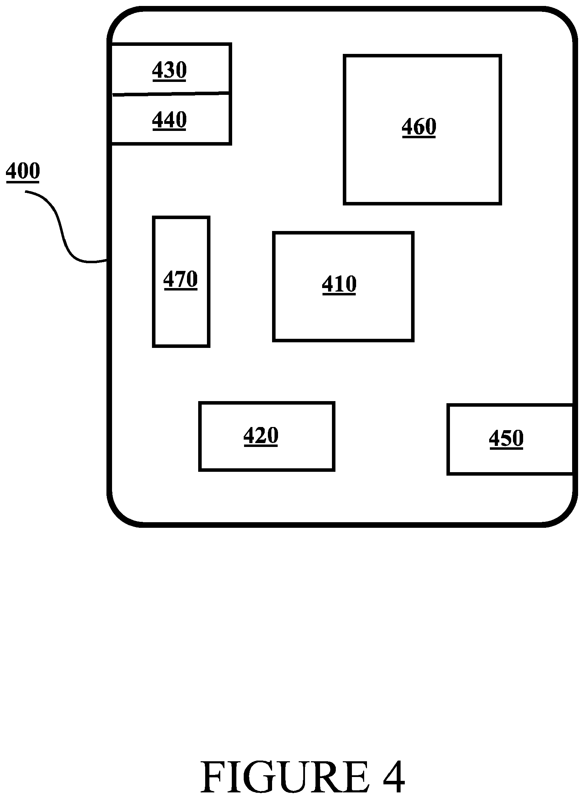

FIGURE 4 illustrates an example apparatus capable of supporting at least some embodiments. Illustrated is device 400, which may comprise, for example, UE 110, BS 120 or a relay, or a device controlling functioning thereof. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-A8 processing core manufactured by ARM Holdings or a Steamroller processing core produced by Advanced Micro Devices Corporation. Processor 410 may comprise at least one Qualcomm Snapdragon and/or Intel Atom processor. Processor 410 may comprise at least one application-specific integrated circuit, ASIC. Processor 410 may comprise at least one field-programmable gate array, FPGA. Processor 410 may be means for performing method steps in device 400. Processor 410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with Global System for Mobile communication, GSM, Wideband Code Division Multiple Access, WCDMA, 5G, Long Term Evolution, LTE, IS-95, Wireless Local Area Network, WLAN, Ethernet and/or Worldwide Interoperability for Microwave Access, WiMAX, standards, for example.

Device 400 may comprise a Near-Field Communication, NFC, transceiver 450. NFC transceiver 450 may support at least one NFC technology, such as Bluetooth, Wibree or similar technologies.

Device 400 may comprise User Interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a Subscriber Identity Module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the embodiments.

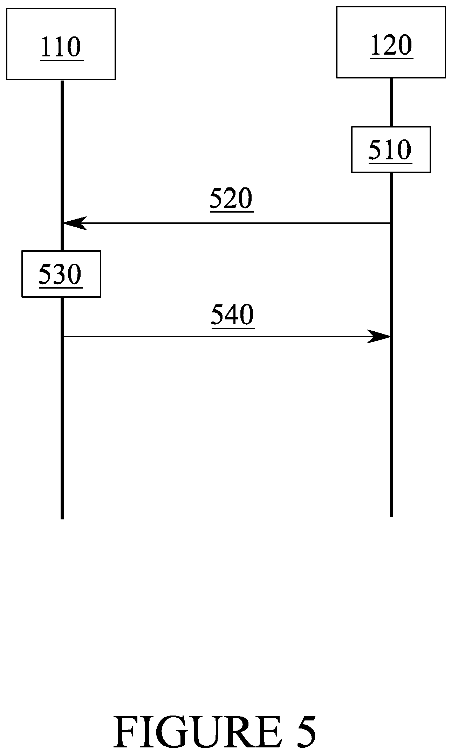

FIGURE 5 illustrates a signalling graph in accordance with at least some embodiments. On the vertical axes are disposed, from the left to the right, UE 110 and BS 120 of FIGURE 1. Time advances from the top towards the bottom.

At step 510, BS 120 may define or determine a configurable SSB pattern, the configurable SSB pattern comprising locations of at least two SSBs in frequency. That is to say, BS 120 may determine locations of the at least two SSBs in frequency. The at least two SSBs may be parallel in frequency and transmitted simultaneously, or at least partly at the same time. The at least two SSBs that are parallel in frequency may follow a predefined grid which may be defined such that a frequency difference between adjacent SSB of the at least two SSBs is N * X MHz.

BS 120 may determine N based on, or as a function of, a subcarrier spacing of a carrier. Thus, N may be determined according to the subcarrier spacing of the carrier. In some embodiments, BS 120 may determine X based on a predefined SSB raster, such as a SSB raster defined in Rel-15 3GPP standard specifications. So X may be determined according to the predefined SSB raster. It may be therefore ensured that search complexity of UE 110 is not increased. Moreover, in some embodiments, X may be 17.28 MHz.

Alternatively, or in addition, BS 120 may determine N based on a bandwidth of an individual SSB of the at least two SSBs that are parallel in frequency, thereby ensuring that the at least two SSBs parallel in frequency are not overlapping. Bandwidths of the at least two SSBs may be the same and if so, it does not matter which one of the at least two SSBs is selected for determining N.

In some embodiments, BS 120 may determine N using a ceiling function. For instance, BS 120 may determine N as follows:

$$N = \left\lceil SCS(MHz) * \frac{240}{17.28 MHz} \right\rceil \qquad (1)$$

, wherein SCS denotes a subcarrier spacing of the carrier. So if the subcarrier spacing of the carrier is 240 kHz, N=4.

In some embodiments, BS 120 may determine a maximum number of SSB locations that may be parallel in frequency according to a minimum a minimum bandwidth capability of UE 110, thereby ensuring that BS 120, such as a gNB, is configured according to the minimum capability of UE 110.

In some embodiments, BS 120 may determine a maximum number of parallel SSB locations in frequency according to the subcarrier spacing selected for the at least two SSBs by BS 120.

In some embodiments, BS 120 may adapt a number of SSBs that are parallel in frequency based on a beamwidth used to transmit the at least two SSBs. BS 120 may adapt the number of the at least two SSBs to find a better balance between coverage and capacity for example. Alternatively, or in addition, BS 120 may adapt the number of the at least two SSBs based on a number of transmitter/receiver chains of BS 120.

At step 520, BS 120 may transmit the at least two SSBs on the carrier, on the determined locations in frequency. That is to say, BS 120 may transmit the configurable SSB pattern, the configurable SSB pattern comprising locations of the at least two SSBs in frequency in accordance with the predefined grid. Thus, BS 120 may transmit the at least two SSBs on the carrier simultaneously or at least partly at the same time, on different orthogonal frequency resources.

In some embodiments, BS 120 may transmit an index of a frequency position of an individual SSB of the at least two SSBs in the individual SSB or in the RMSI, associated with the individual SSB. That is to say, the individual SSB or the RMSI associated with the individual SSB may indicate the index of the frequency position of the individual SSB, to ensure that UE 110 can learn the SSB configuration, i.e., the SSB pattern, with minimum added signalling. Alternatively, or in addition, the individual SSB or the RMSI associated with the individual SSB may indicate a number of frequency locations used to carry the at least two SSBs.

In some embodiments, a mapping table may be used and an index to the mapping table may be transmitted by BS 120. The mapping table may define possible frequency-multiplexed SSB configurations and it may be used together with the SSB index to define the time-and frequency position of a detected SSB.

Consequently, UE 110 may receive the at least two SSBs simultaneously on the carrier at step 520. In some embodiments, UE 110 may receive the index of the frequency position of the individual SSB in the individual SSB or in the RMSI associated with the individual SSB as well, and detect the SSB configuration, i.e., the SSB pattern accordingly with minimum added signalling. The at least two SSBs may be in parallel in frequency and a frequency difference between adjacent SSBs of the at least two SSBs may be N * X MHz, and N may be based on a subcarrier spacing of the carrier.

In some embodiments, UE 110 may determine N based on the subcarrier spacing of the carrier, X based on the predefined SSB raster and/or N based on a bandwidth of an individual SSB of the at least two SSBs, similarly as BS 120. Alternatively, or in addition, UE 110 may determine N using the ceiling function of Equation (1). In some embodiments, UE 110 may determine a maximum number of parallel SSB locations in frequency according to a minimum bandwidth capability of UE 110. Upon determining N and X, UE 110 may determine the frequency difference between adjacent SSBs of the at least two SSBs. UE 110 may exploit the frequency difference for example by determining a frequency location of another SSB based on a frequency location of an individual detected SSB. Thus, the beam scanning process may be expedited.

Upon receiving the at least two SSBs, UE 110 may, at step 530, identify a cell of BS 120 that transmitted the at least two SSBs based on the at least two SSBs. For instance, UE 110 may decode PSS and SSS to determine a Physical Cell ID, PCI, and DMRS, located on the synchronization raster.

UE 110 may detect an individual SSB of the received at least two SSBs. Upon detecting the individual SSB, UE 110 may obtain an index of the detected individual SSB and a number of SSBs that are parallel in frequency per channel bandwidth or a bandwidth part. UE 110 may for example receive the index of the detected individual SSB and the number of SSBs that are parallel in frequency from BS 120.

In addition, or alternatively, UE 110 may obtain the index of the individual SSB after detecting the individual SSB, and based on UE-specific Radio Resource Control, RRC, signaling or after detecting the RMSI, UE 110 may obtain the number of SSBs that are parallel in frequency per channel bandwidth or a bandwidth part.

In some embodiments, UE 110 may determine, possibly upon detecting RMSI, a frequency location of another SSB of the at least two SSBs based on the index of the detected individual SSB. That is to say, based on the index of the detected individual SSB and the number of SSBs that are in parallel in frequency, UE 110 may adjust its transceiver's carrier frequency to align with the channel bandwidth or the bandwidth part used to transmit the at least two SSBs to, e.g., improve SSB based measurement set or correctly define frequency resources for Random Access Channel, RACH, occasions. In some embodiments, UE 110 may need to keep track of all beams, not only the best beam but also other beams, such as neighboring beams.

In some embodiments, UE 110 may operate in connected or RRC inactive mode and UE 110 may, upon receiving information related to frequency multiplexed SSB-based intra- and inter-cell measurements through UE specific RRC signalling, measure the at least two SSBs for, e.g., beam re-selection, beam refinement, or mobility related procedures.

In general, UE 110 may select a strongest beam for communicating with a cell of BS 120 based on the at least two received SSBs at step 530 and then communicate with BS 120 on the strongest beam. That is to say, UE 110 may select a strongest beam from the beams that carry the at least two received SBBs as each of the at least two SSBs is carried by a different beam. For instance, UE 110 may send a RACH request in Msg1 to BS 120 for the strongest beam at step 540. Step 540 is optional though.

In some embodiments, SSB and CORESET for TypeO-PDCCH multiplexing patterns in FR2 are provided in, e.g., in accordance with 3GPP TS 38.213, section 13. Three different patterns (1, 2, 3) may be defined and supported in FR2. Both TDM and FDM multiplexing patterns may be supported. Further, in TDM multiplexing Type0-PDCCH may be configured with time offset of 0 (Type0-PDCCH allocated in the same slots as SSBs), 2.5, 5 or 7.5 ms relative to SSBs.

In some embodiments, the following subcarrier spacing combinations may be supported as in FR2 for (SSS, TypeO-PDCCH):

- (SSB, TypeO-PDCCH): (120, 60) kHz

  - Applicable patterns: 1, 2

- (SSB, TypeO-PDCCH): (120, 120) kHz

  - Applicable patterns: 1, 3

- (SSB, TypeO-PDCCH): (240, 60) kHz

  - Applicable patterns: 1

- (SSB, TypeO-PDCCH): (240, 120) kHz

  - Applicable patterns: 1, 2

In some embodiments, BS 120 or UE 110 may determine N based at least on a bandwidth of one CORESET of the at least two SSBs (e.g., Scenario 1, pattern 1 may be used and CORESET bandwidth is larger than SSB bandwidth) or a bandwidth of one SSB and on CORESET of the at least two SSBs (e.g., Scenario 2, pattern 2 or pattern 3 is used). When determining N, BS 120 or UE 110 may take into account that subcarrier spacing configured for SSB and TypeO-PDCCH may be different, as indicated above. UE 110 may become aware of the subcarrier spacing for TypeO-PDCCH based on signalling received via PBCH.

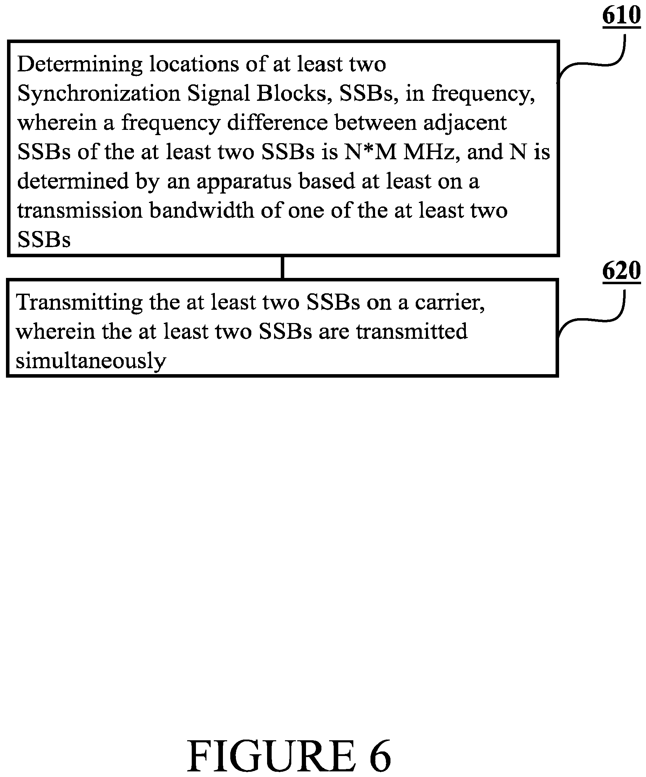

FIGURE 6 is a flow graph of a first method in accordance with at least some embodiments. The phases of the illustrated first method may be performed by BS 120 or a relay, or by a control device configured to control the functioning thereof, possibly when installed therein.

The first method may comprise, at step 610, determining locations of at least two Synchronization Signal Blocks, SSBs, in frequency, wherein a frequency difference between adjacent SSBs of the at least two SSBs is N * X MHz, and N is determined by an apparatus based at least on a transmission bandwidth of one of the at least two SSBs. The first method may also comprise, at step 620, transmitting the at least two SSBs on a carrier, wherein the at least two SSBs are transmitted simultaneously.

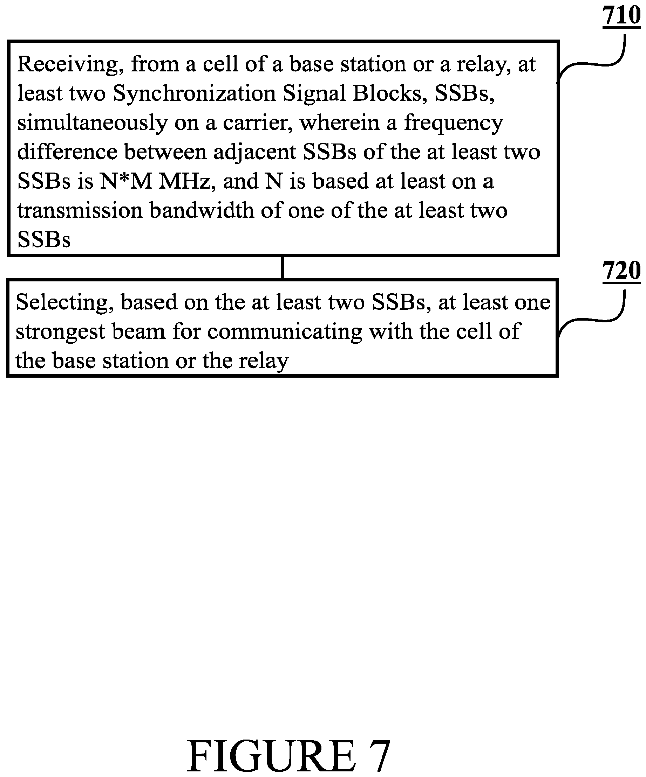

FIGURE 7 is a flow graph of a second method in accordance with at least some embodiments. The phases of the illustrated second method may be performed by UE 110 or a relay, or by a control device configured to control the functioning thereof, possibly when installed therein.

The second method may comprise, at step 710, receiving, from a cell of a base station or a relay, at least two Synchronization Signal Blocks, SSBs, simultaneously on a carrier, wherein a frequency difference between adjacent SSBs of the at least two SSBs is N * X MHz, and N is based at least on a transmission bandwidth of one of the at least two SSBs. The second method may also comprise, at step 720, selecting, based on the at least two SSBs, at least one strongest beam for communicating with the cell of the base station or the relay.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an exemplary embodiment, an apparatus, such as, for example, UE 110, BS 120 or a relay, or a control device configured to control the functioning thereof, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, UE 110, BS 120 or a relay, or a control device configured to control the functioning thereof, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments find industrial application in cellular communication networks, for example in networks wherein SSBs are used.

ACRONYMS LIST

| | |
|---|---|
| 3GPP | 3rd Generation Partnership Project |
| BS | Base Station |
| DMRS | Demodulation Reference Signals |
| EIRP | Effective Isotropic Radiated Power |
| FFT | Fast Fourier Transform |
| GSM | Global System for Mobile communication |
| IoT | Internet of Things |
| LTE | Long-Term Evolution |
| M2M | Machine-to-Machine |
| MIB | Master Information Block |
| MTC | Machine Type Communications |
| NFC | Near-Field Communication |
| NR | New Radio |
| PBCH | Physical Broadcast Channel |

| | |
|---|---|
| PCI | Physical Cell ID |
| PSS | Primary Synchronization Signal |
| RACH | Random Access Channel |
| RAN | Radio Access Network |
| RAT | Radio Access Technology |
| RF | Radio Frequency |
| RMSI | Remaining Minimum System Information |
| RRC | Radio Resource Control |
| SSB | Synchronization Signal Block |
| SSS | Secondary Synchronization Signal |
| UE | User Equipment |
| UI | User Interface |
| URLLC | Ultra-Reliable Low-Latency Communication |
| WCDMA | Wideband Code Division Multiple Access |

REFERENCE SIGNS LIST

| | |
|---|---|
| 110 | User Equipment |
| 115 | Beams in FIGURE 1 |
| 120 | Base Station |
| 125, 135 | Wired interfaces |
| 130 | Core Network |
| 210,220 | SSBs |
| 310, 320, 330, 340 | Subpanels |
| 315, 325, 335, 345 | Beams in FIGURE 3 |
| 400 - 470 | Structure of the apparatus of FIGURE 4 |
| 510 - 540 | Phases of the signaling graph of FIGURE 5 |
| 610 - 620 | Phase of the first method in FIGURE 6 |
| 710 - 720 | Phase of the second method in FIGURE 7 |

**Claims**

1. An apparatus, comprising:

   - means for determining locations of at least two Synchronization Signal Blocks, SSBs, in frequency, wherein a frequency difference between adjacent SSBs of the at least two SSBs is N $*$ X MHz, and N is determined by the apparatus based at least on a transmission bandwidth of one of the at least two SSBs; and
   - means for transmitting the at least two SSBs on a carrier, wherein the at least two SSBs are transmitted simultaneously.

2. An apparatus according to claim 1, comprising:

   - means for determining N based at least on a subcarrier spacing of the carrier, wherein the subcarrier spacing is preferably 240 kHz and N=4; and/or
   - means for determining X based at least on a predefined SSB raster, wherein X is preferably 17.28 MHz.

3. An apparatus according to claim 1 or claim 2, comprising:

   - means for determining a maximum number of simultaneous SSB locations in frequency based on a minimum bandwidth capability of a user equipment.

4. An apparatus according to any of the preceding claims, comprising:

   - means for determining at least one of a maximum number of simultaneous SSB locations in frequency and parameter N based on a subcarrier spacing selected for the at least two SSBs by the apparatus.

5. An apparatus according to any of the preceding claims, comprising:

   - means for adapting a number of simultaneous SSBs in frequency based on a beamwidth used to transmit the at least two SSBs and/or a number of transceiver chains of the apparatus.

6. An apparatus according to any of the preceding claims, comprising:

   - means for transmitting an index of a frequency location of an individual SSB in the individual SSB or in a Remaining Minimum System Information, RMSI, associated with the individual SSB.

7. An apparatus according to claim 6, wherein the individual SSB or the RMSI associated with the individual SSB indicates a number of frequency locations used to carry the at least two SSBs.

8. An apparatus, comprising:

   - means for receiving, from a cell of a base station or a relay, at least two Synchronization Signal Blocks, SSBs, simultaneously on a carrier, wherein a frequency difference between adjacent SSBs of the at least two SSBs is N * X MHz, and N is based at least on a transmission bandwidth of one of the at least two SSBs; and
   - means for selecting, based on the at least two SSBs, at least one strongest beam for communicating with the cell of the base station or the relay.

9. An apparatus according to claim 8, wherein X is based at least on a predefined SSB raster, and X is preferably 17.28 MHz, and/or N is based at least on a subcarrier spacing of the carrier, wherein the subcarrier spacing is preferably 240 kHz and N=4.

10. An apparatus according to claim 8 or claim 9, further comprising:

   - means for detecting an individual SSB of the at least two SSBs; and
   - means for obtaining an index of the detected individual SSB and a number of simultaneous SSBs channel bandwidth or a bandwidth part.

11. An apparatus according to claim 10, further comprising:

   - means for adjusting a carrier frequency of the apparatus based on the index of the detected individual SSB and the number of simultaneous SSBs.

12. An apparatus according to claim 10 or claim 11, further comprising:

   - means for determining a frequency location of another SSB of the at least two SSBs based on the index of the detected individual SSB.

13. A method for a base station or a relay, comprising:

   - determining locations of at least two Synchronization Signal Blocks, SSBs, in frequency, wherein a frequency difference between adjacent SSBs of the at least two SSBs is N * X MHz, and N is determined by an apparatus based at least on a transmission bandwidth of one of the at least two SSBs; and
   - transmitting the at least two SSBs on a carrier, wherein the at least two SSBs are transmitted simultaneously.

14. A method for a user equipment or a relay, comprising:

   - receiving, from a cell of a base station or a relay, at least two Synchronization Signal Blocks, SSBs, simultaneously on a carrier, wherein a frequency difference between adjacent SSBs of the at least two SSBs is N * X MHz, and N is based at least on a transmission bandwidth of one of the at least two SSBs; and

- selecting, based on the at least two SSBs, at least one strongest beam for communicating with the cell of the base station or the relay.

15. A computer program configured to perform a method according to claim 13 or claim 14.

# FIGURE 1

FIGURE 2

(a)

(b)

FIGURE 3

**430**

**440**

**400**

**460**

**470**

**410**

**420**

**450**

# FIGURE 4

FIGURE 5

<u>610</u>

Determining locations of at least two Synchronization Signal Blocks, SSBs, in frequency, wherein a frequency difference between adjacent SSBs of the at least two SSBs is N*M MHz, and N is determined by an apparatus based at least on a transmission bandwidth of one of the at least two SSBs

<u>620</u>

Transmitting the at least two SSBs on a carrier, wherein the at least two SSBs are transmitted simultaneously

# FIGURE 6

**710**

Receiving, from a cell of a base station or a relay, at least two Synchronization Signal Blocks, SSBs, simultaneously on a carrier, wherein a frequency difference between adjacent SSBs of the at least two SSBs is N*M MHz, and N is based at least on a transmission bandwidth of one of the at least two SSBs

**720**

Selecting, based on the at least two SSBs, at least one strongest beam for communicating with the cell of the base station or the relay

# FIGURE 7

Europäisches
Patentamt

European
Patent Office

Office européen
des brevets

# EUROPEAN SEARCH REPORT

Application Number

EP 20 15 7441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 567 761 A1 (LG ELECTRONICS INC [KR]) 13 November 2019 (2019-11-13)<br>* paragraph [0149] *<br>* paragraph [0182] - paragraph [0187]; figure 10 * | 1-15 | INV.<br>H04L5/00<br>H04B7/06 |
| Y | WO 2018/171379 A1 (ERICSSON TELEFON AB L M [SE]; LI GEN [CN]) 27 September 2018 (2018-09-27)<br>* paragraph [0052] - paragraph [0067]; figures 2-4 *<br>* paragraph [0091] * | 1-15 | |
| Y | EP 3 471 296 A1 (LG ELECTRONICS INC [KR]) 17 April 2019 (2019-04-17)<br>* paragraph [0087] - paragraph [0095] *<br>* paragraph [0147] * | 1-15 | |
| Y | QUALCOMM INCORPORATED: "WF on SS Raster", 3GPP DRAFT; R4-1714514, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG4, no. Reno, U.S.A; 20171127 - 20171201<br>5 December 2017 (2017-12-05), XP051376122, Retrieved from the Internet: URL:http://www.3gpp.org/ftp/tsg%5Fran/WG4%5FRadio/TSGR4%5F85/Docs/<br>[retrieved on 2017-12-05]<br>* page 3 - page 5 * | 1-15 | TECHNICAL FIELDS SEARCHED (IPC)<br><br>H04L<br>H04B |
| A | WO 2019/136725 A1 (GUANGDONG OPPO MOBILE TELECOMMUNICATIONS CORP LTD [CN]) 18 July 2019 (2019-07-18)<br>* paragraph [0101] * | 1-15 | |

-/--

The present search report has been drawn up for all claims

| Place of search | Date of completion of the search | Examiner |
|---|---|---|
| The Hague | 7 August 2020 | Devillers, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 15 7441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/110314 A1 (ABEDINI NAVID [US] ET AL) 11 April 2019 (2019-04-11) * paragraph [0056] * ----- | 1-15 | |

TECHNICAL FIELDS
SEARCHED       (IPC)

The present search report has been drawn up for all claims

| Place of search | Date of completion of the search | Examiner |
|---|---|---|
| The Hague | 7 August 2020 | Devillers, Bertrand |

EPO FORM 1503 03.82 (P04C01)

## ANNEX TO THE EUROPEAN SEARCH REPORT
## ON EUROPEAN PATENT APPLICATION NO.

EP 20 15 7441

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2020

| Patent document cited in search report | | | Publication date | Patent family member(s) | | | Publication date |
|---|---|---|---|---|---|---|---|
| EP 3567761 | A1 | | 13-11-2019 | CN | 110392989 | A | 29-10-2019 |
| | | | | EP | 3567761 | A1 | 13-11-2019 |
| | | | | JP | 2020500453 | A | 09-01-2020 |
| | | | | KR | 20190029617 | A | 20-03-2019 |
| | | | | US | 2019159148 | A1 | 23-05-2019 |
| | | | | WO | 2019050197 | A1 | 14-03-2019 |
| WO 2018171379 | A1 | | 27-09-2018 | AR | 111339 | A1 | 03-07-2019 |
| | | | | BR | 112019019607 | A2 | 22-04-2020 |
| | | | | CN | 109076544 | A | 21-12-2018 |
| | | | | EP | 3424257 | A1 | 09-01-2019 |
| | | | | JP | 2020516120 | A | 28-05-2020 |
| | | | | KR | 20190118642 | A | 18-10-2019 |
| | | | | WO | 2018171379 | A1 | 27-09-2018 |
| EP 3471296 | A1 | | 17-04-2019 | CN | 110392991 | A | 29-10-2019 |
| | | | | EP | 3471296 | A1 | 17-04-2019 |
| | | | | JP | 2020503823 | A | 30-01-2020 |
| | | | | KR | 20180137419 | A | 27-12-2018 |
| | | | | KR | 20190018659 | A | 25-02-2019 |
| | | | | US | 2019363809 | A1 | 28-11-2019 |
| | | | | US | 2020120622 | A1 | 16-04-2020 |
| | | | | WO | 2018230984 | A1 | 20-12-2018 |
| WO 2019136725 | A1 | | 18-07-2019 | CN | 110710151 | A | 17-01-2020 |
| | | | | WO | 2019136725 | A1 | 18-07-2019 |
| US 2019110314 | A1 | | 11-04-2019 | CN | 111183684 | A | 19-05-2020 |
| | | | | EP | 3695659 | A1 | 19-08-2020 |
| | | | | TW | 201924415 | A | 16-06-2019 |
| | | | | US | 2019110314 | A1 | 11-04-2019 |
| | | | | WO | 2019074702 | A1 | 18-04-2019 |

EPO FORM P0459

For more details about this annex : see Official Journal of the European Patent Office, No. 12/82